# DEMANDE DE BREVET EUROPEEN

(11) **EP 1 714 537 A1**
(43) Date de publication de la demande: **25.10.2006**
(21) Numéro de dépôt: 06300375.0
(22) Date de dépôt: 19.04.2006
(51) Int. Cl.: A01B 33/06, A01B 33/02, A01B 33/04, A01B 33/10

(54) **Equipement aratoire de type herse rotative**

(30) Priorité: 21.04.2005 FR 0551016
(71) Demandeur: Coeuret, Bernard, 14310 Epinay sur Odon (FR)
(72) Inventeur: Coeuret, Bernard, 14310 Epinay sur Odon (FR)
(74) Mandataire: Herrburger, Pierre

(57) **Abrégé**

Equipement aratoire de type herse rotative, formé d'un châssis (1) porté ou tracté par un tracteur et équipé d'outils rotatifs travaillant le sol à une profondeur réglable.

Le châssis (1) comporte au moins un rotor (2) d'axe descendant (ZZ) et portant des bras (23) munis de satellites (25) garnis de dents (252) destinées à travailler le sol ; le rotor (2) est entraîné en rotation autour de son axe (ZZ) et chaque satellite (25) étant entraîné autour de son axe (XX).

## Description

### Domaine de l'invention

La présente invention concerne un équipement aratoire de type herse rotative, formé d'un châssis porté ou tracté par un tracteur et équipé d'outils rotatifs travaillant le sol à une profondeur réglable.

### Etat de la technique

Il existe de nombreuses réalisations de herses rotatives et des documents les décrivant.

Une herse rotative du type défini ci-dessus est constituée par des supports tournant autour d'un axe descendant (« vertical") et portant en général deux dents dans des positions diamétralement opposées. Ces dents en forme de tige décrivent des mouvements circulaires dans le sol. Ce mouvement circulaire est combiné au mouvement de translation d'avancée de la herse. Le principal inconvénient de ce type de herse rotative est que les dents effectuent des mouvements de rotation en restant parallèles à leur axe de rotation de sorte que les dents décrivent par leur rotation une surface cylindrique ou conique de sorte que le sol n'est remué que par couche ou strate dans le plan perpendiculaire à l'axe de rotation des outils de la herse.

### But de l'invention

La présente invention a pour but de développer un équipement aratoire du type défini ci-dessus permettant de remuer efficacement le sol sans créer de stratification ou laisser subsister une stratification et risque de glacer le fond de la couche de terre travaillée.

### Exposé et avantages de l'invention

A cet effet l'invention concerne un équipement aratoire du type défini ci-dessus caractérisé en ce que le châssis comporte au moins un rotor d'axe descendant et portant des branches munies de satellites garnis de dents destinées à travailler le sol, le rotor étant entraîné en rotation autour de son axe et chaque satellite étant entraîné autour de son axe.

Le mouvement complexe des dents des satellites résultant de la combinaison des deux mouvements de rotation, celui du rotor et celui de chaque satellite, permet un travail très efficace du sol en mélangeant la masse de terre sur toute la hauteur de la couche travaillée et aussi transversalement sans pour autant créer une surface glacée au fond de la couche travaillée. En effet, la trajectoire de l'extrémité des dents et, en particulier, de celle des dents qui descendent le plus profondément dans le sol étant une trajectoire non pas contenue dans un plan mais une trajectoire tridimensionnelle, les dents qui se suivent ne passent pas par des traces jointives mais griffent le fond de la couche travaillée en arrachant des morceaux plus ou moins importants ou en les remuant, en fonction de la cohésion du sol travaillé. Cette irrégularité de la limite inférieure de la couche travaillée, ne constitue pas une surface mais un ensemble de traces ou de griffures qui, lors d'un passage de la machine ne peut constituer l'amorce d'une surface glacée et après plusieurs passages de l'équipement dans le sol au cours de campagnes successives de travail, cette irrégularité est le griffage du sol évitent à long terme le développement d'une surface glacée comme cela est le cas pour de nombreux équipements aratoires de type charrue ou herse rotative.

La diversité des formes de dents qui peuvent équiper chaque satellite permet une très grande souplesse d'adaptation de l'équipement au travail à effectuer et/ou à la nature du sol.

L'entretien de l'équipement est simplifié : une dent cassée par des chocs contre un rocher se remplace facilement ou si le satellite est abîmé, celui-ci se démonte et se remplace tout aussi simplement.

Il est également possible d'envisager plusieurs types de satellites équipés de dents différentes selon les travaux à effectuer.

L'équipement peut travailler le sol à des profondeurs très variables allant d'un simple grattage en surface jusqu'à un travail en profondeur.

Le non-parallélisme des dents de chaque rotor favorise également le débourrage puisque la terre, même agglutinée, ou les végétaux sont expulsés des dents du fait des forces centrifuges, qui font glisser les accumulations vers la pointe des dents, contrairement aux herses rotatives qui accumulent les végétaux autour des dents ou de la base des dents sans que ces végétaux ne puissent être alors éjectés des dents en glissant dans la direction longitudinale de celles-ci.

Enfin, la répartition régulière des satellites autour du rotor et la combinaison des mouvements permet un fonctionnement équilibré de la machine puisque les composantes du mouvement ne sont plus uniquement contenues dans une surface parallèle au sol travaillé comme dans le cas d'une herse rotative.

Suivant une autre caractéristique de l'invention, un satellite est formé d'un moyeu portant des dents rayonnantes, notamment dirigées radialement.

Les dents rayonnantes, et en particulier dirigées radialement, sont intéressantes car la régularité de la forme rend les positions des dents ou les dents qu'elles reçoivent, interchangeables, ce qui simplifie la fabrication et la gestion du stock de pièces détachées dans la mesure où toutes les dents sont interchangeables. Cette disposition radiale favorise également le débourrage des satellites ou évite qu'ils ne puissent se charger de terre ou de végétaux.

L'orientation rayonnante existe pour des dents dirigées de manière radiale au sens strict. Cela est également vrai pour des dents inclinées par rapport à la direction radiale passant par leur base de fixation au satellite car cette direction non radiale fait néanmoins que les différentes dents d'un même satellite ne sont jamais parallèles, évitant ainsi le risque de bourrage. Cet effet est également mis à profit pour le travail dans le sol puisque, là encore, les dents ne risquent pas de bourrer et de se charger d'une couche de terre agglomérée puisque la terre remuée est nécessairement soumise à une force centrifuge tendant à l'expulser du rotor.

Suivant une autre caractéristique de l'invention, le moyeu du satellite est en forme de boule sensiblement sphérique composée d'une couronne cylindrique équatoriale et portant de chaque côté deux troncs de cône, la couronne et les troncs de cône étant munis chacun d'un ensemble de dents.

Cette forme de réalisation est d'une géométrie particulièrement simple à fabriquer car une couronne cylindrique et un tronc de cône sont des pièces simples en mécanosoudure. Cette forme favorise également l'installation du satellite sur son arbre : le fond de l'un des troncs de cône est ouvert pour recevoir l'arbre et l'autre est ouvert ou fermé par un cache vissé, pour accéder à la fixation du satellite sur son arbre.

Suivant une autre caractéristique avantageuse, les dents de la couronne et celles des troncs de cône sont décalées angulairement.

Cette répartition des dents sur le moyeu du satellite augmente l'intervalle des dents et aussi l'inclinaison relative d'une dent par rapport aux dents voisines, améliorant d'autant la vitesse de débourrage.

Suivant une autre caractéristique avantageuse, le moyeu du satellite est en forme de cylindre muni d'ensembles de dents répartis à la périphérie.

Cette forme de réalisation du moyeu est simple et la fixation du moyeu sur l'arbre qui l'entraîne est tout aussi simple que la fixation d'un moyeu de satellite en forme de boule.

Suivant une autre caractéristique avantageuse, les dents sont en forme de tige ou de lame, vissées au moyeu de leur satellite.

Cette forme de dent soit comme des tiges mais aussi de lame permet d'adapter l'équipement à tout travail particulier et notamment les lames favorisent le déchiquetage des végétaux. Pour cela, il n'est pas nécessaire que l'ensemble des dents d'un même satellite soit constitué uniformément d'un seul type de dents. En revanche, il est possible de combiner plusieurs formes de dents et d'équiper par exemple chaque rotor ou certains des rotors, de dents en forme de lame et d'autres en forme de tige, la seule condition à respecter étant la bonne répartition des masses autour de l'axe du satellite.

Suivant une autre caractéristique avantageuse, les branches du rotor sont inclinées vers le bas par rapport à l'axe du rotor.

L'inclinaison des branches du rotor permet d'augmenter la garde au sol du fond du rotor de sorte qu'en position verticale ou quasi verticale de l'axe des rotors, la machine peut travailler le sol sans que le fond des rotors ne frotte.

Suivant une réalisation avantageuse par sa simplicité et sa polyvalence, l'équipement comporte trois rotors et chaque rotor a trois branches munies d'un satellite, réparties de manière équiangulaire, les branches des rotors voisins étant décalées angulairement de façon que pour la rotation, une branche d'un rotor passe entre deux branches du rotor voisin.

### Dessins

La présente invention sera décrite ci-après à l'aide d'un mode de réalisation représenté schématiquement dans les dessins annexés dans lesquels :
- la figure 1 est une vue en perspective simplifiée d'un équipement selon l'invention,
- la figure 2 est une vue de côté de l'équipement de la figure 1,
- la figure 3 est une vue de côté de détail de l'équipement de la figure 1, se limitant à la présentation d'une partie d'un rotor et d'un satellite,
- la figure 4 montre une position particulière de travail de l'équipement de la figure 1,
- les figures 5A-5c sont des vues de dessus schématiques de trois modes de réalisation ou variante de l'équipement selon l'invention.

### Description d'un mode de réalisation de l'invention

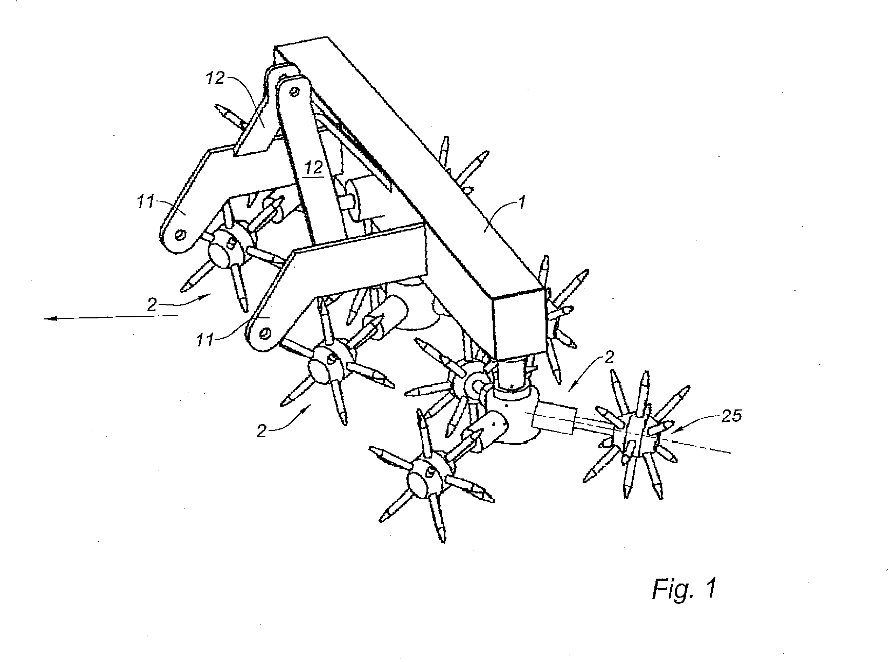

Selon la figure 1, l'invention concerne un équipement aratoire de type herse rotative composé d'un châssis 1 en forme de caisson transversal muni de deux bras inférieurs 11 et de branches montantes 12 pour permettre l'installation sur l'attelage en trois points d'un tracteur. Le châssis 1 porte trois rotors 2 identiques d'axe ZZ, montant ou « vertical » mais qui, suivant la position réglée par l'attelage en trois points, sera plus ou moins incliné par rapport à la direction verticale.

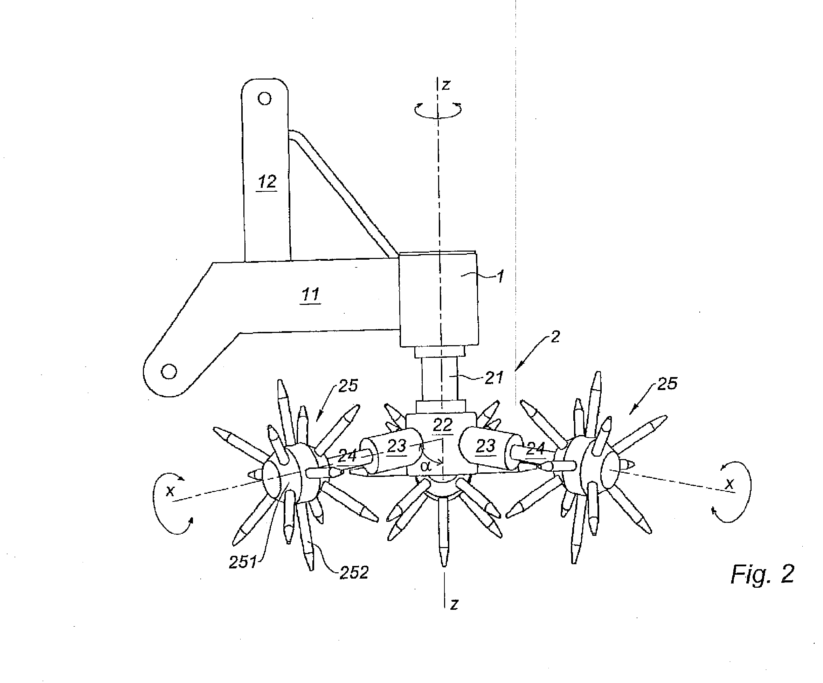

Selon les figures 1 et 2, chaque rotor 2 se compose d'un arbre principal 21 portant un moyeu 22 tournant autour de l'axe ZZ en étant entraîné par un mécanisme de transmission non détaillé tel qu'un train d'engrenages logé dans le châssis 1 et recevant son mouvement de la prise de force du tracteur. Le rotor 2 porte des branches 23 rayonnantes régulièrement disposées. Ces branches 23 peuvent être inclinées par rapport à l'axe ZZ suivant un angle (α) nettement inférieur à 90°.

Les branches 23 ont chacune un arbre auxiliaire 24 portant un satellite 25. Ces satellites 25 sont constitués eux-mêmes d'un moyeu 251 garni de dents 252 sensiblement radiales. L'arbre 24 du satellite tourne autour de son axe géométrique XX avec le moyeu 251 et les dents 252.

L'entraînement en rotation du satellite 25 d'un rotor 2 peut se faire simplement d'une manière non représentée, par un pignon porté par l'arbre 24 du satellite, logé à l'intérieur du moyeu 22 du rotor et engrenant avec une couronne également logée dans le moyeu du rotor. La couronne dentée peut être fixe par rapport à l'axe ZZ. Cette couronne peut également être solidaire d'un arbre secondaire entraîné en rotation autour de l'axe ZZ en passant dans l'arbre primaire du rotor et recevant son mouvement d'une transmission logée dans le châssis. Ce mouvement peut être déduit du mouvement de rotation principal suivant un rapport de réduction ou de démultiplication approprié, éventuellement modifiable par le changement de la transmission logée dans le châssis et constituée par une succession de pignons ou groupes de pignons. Les différents moyens de transmission ne sont pas représentés dans les dessins.

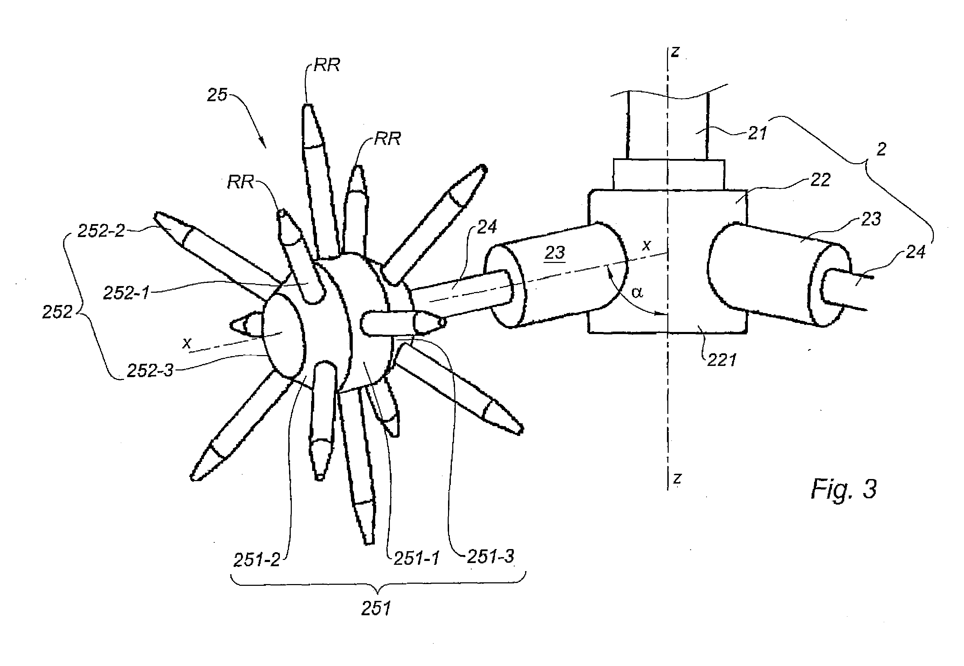

Plus particulièrement selon la figure 3, le satellite porté par son arbre est constitué par un moyeu 251 en forme de boule composé d'une couronne cylindrique équatoriale 251-1 portant de chaque côté deux troncs de cône 252-2, 252-3. La couronne équatoriale et les troncs de cône sont munis chacun d'un ensemble de dents radiales 252.

La direction radiale RR stricte des dents est intéressante, mais elle n'est pas la seule possible. Les dents peuvent être inclinées par rapport à la direction radiale RR passant par leur base 252-1 et le centre du moyeu 257 et cette inclinaison peut être différente pour les dents de la couronne cylindrique équatoriale 251-1 et celles des parties tronconiques 252-2, 252-3.

Dans l'exemple présenté, les dents 252 sont simplement constituées par des tiges cylindriques terminées par une extrémité conique 252-2, l'autre extrémité non représentée près de la base 252-1 étant filetée pour être vissée dans le moyeu 251. Selon une variante, les dents sont en forme de lames droites ou vrillées suivant le travail à effectuer et en particulier pour déchiqueter des végétaux, il peut être intéressant d'utiliser des dents en forme de lames.

Les satellites 25 sont avantageusement installés de manière amovible sur leur arbre 24 par une fixation accessible par le petit sommet du tronc de cône extérieur 251-2 du moyeu 251 ou plus généralement par la calotte 251-3 du moyeu. L'interchangeabilité des satellites 25 permet de réparer facilement les dents 252 ou de changer de type de dents.

Dans le mode de réalisation, les branches 23 du rotor 2 sont légèrement inclinées d'un angle (α) par rapport à l'axe ZZ. Cette inclinaison (α) peut être accentuée de façon que les satellites 25 se trouvent nettement en dessous du moyeu 22 du rotor 2 pour avoir ainsi une garde au sol plus importante du fond 221 du moyeu 22 lorsque l'axe ZZ est vertical ou faiblement incliné.

Dans l'exemple, l'équipement comporte trois rotors 2 et chaque rotor est équipé de trois branches 23 avec leur satellite 25. Ce nombre de satellites correspond à un optimum pour la conception d'ensemble de l'équipement, de façon que les satellites 25 de deux rotors 2 puissent s'imbriquer les uns dans les autres lors de leur rotation et de celle des rotors.

Les rotors 2 effectuent un mouvement de rotation autour de leur axe ZZ et ce mouvement de rotation est combiné à la rotation des satellites 25 chacun autour de son axe XX. Le chevauchement des zones travaillées par deux rotors 2 voisins permet un transfert de matière d'un rotor à l'autre ce qui assure un mélange particulièrement efficace du sol et une bonne homogénéisation.

Selon une variante non représentée, en fonction de l'utilisation de l'équipement et selon les travaux à effectuer, les satellites de deux rotors peuvent être équipés d'outils (dents) de nature différente.

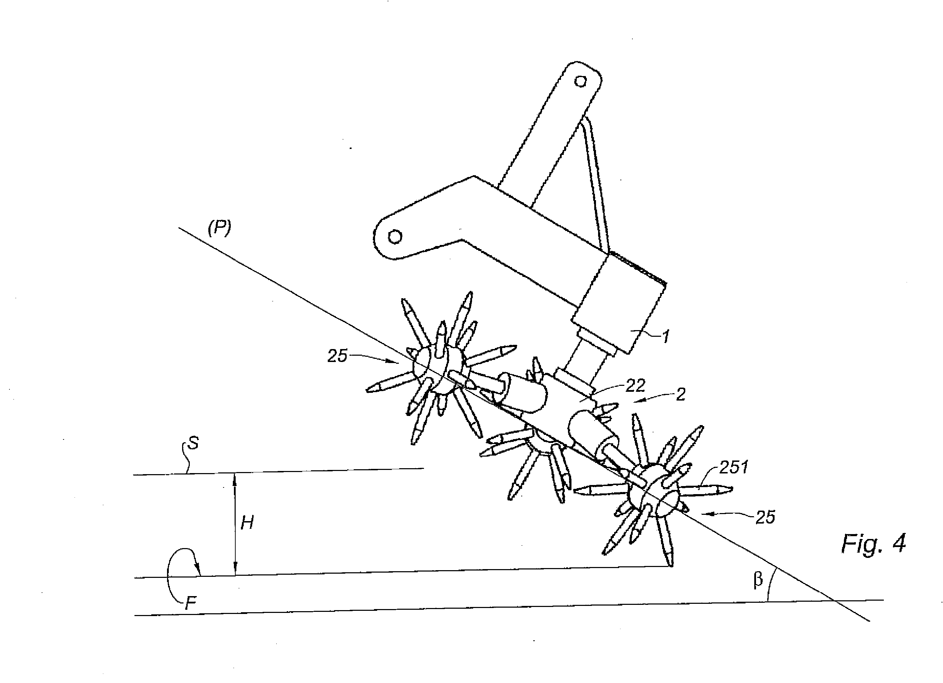

La figure 4 montre une possibilité particulièrement intéressante de l'invention, par l'inclinaison (β) du plan de travail (P) des rotors 2 par rapport à la surface du sol S, de manière à travailler en profondeur sur une hauteur (H) pour que le moyeu 22 des rotors 2 soit juste au-dessus du sol. Le réglage d'inclinaison (β) est combiné à un relevage / abaissement du châssis 1 de la machine. Cette figure montre également que le mouvement complexe des dents évite le glaçage au fond (F) de la couche travaillée puisque les dents qui descendent le plus profondément décrivent des courbes tridimensionnelles qui ne laissent pas de traces jointives d'une dent à l'autre mais griffent le sol au fond (F) de la couche travaillée et conservent sa perméabilité.

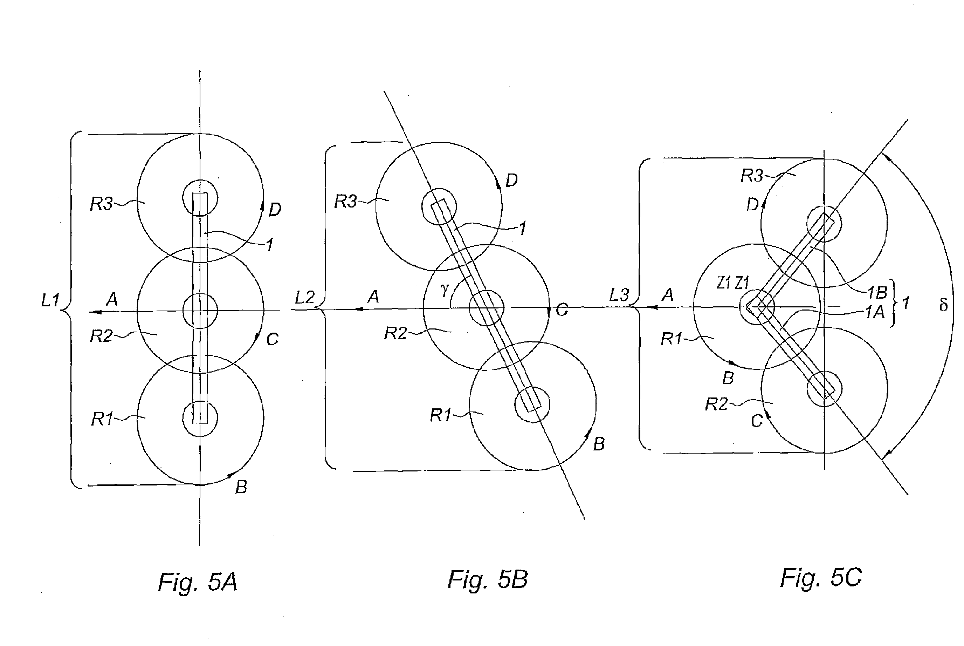

Les figures 5A-5C montrent selon une vue en plan, trois modes de réalisation d'un équipement aratoire à trois rotors R1-R-3 porté par un châssis 1, travaillant dans le sens des flèches A, les rotors tournant dans le sens des flèches B, C, D. Les zones circulaires balayées par les rotors R1-R3 sont indiquées par leur périphérie extérieure ; en général ces zones se recoupent et les outils des rotors effectuent des mouvements « engrenés » ou « imbriqués ».

La figure 5A montre la disposition transversale de l'équipement par rapport à la direction de déplacement A offrant la plus grande largeur de travail L1.

La figure 5B montre une disposition inclinée de l'équipement, d'un angle (γ) par rapport à la direction de déplacement A donnant une largeur de travail L2 plus réduite que la précédente.

La figure 5C montre une structure de châssis 1 en V transversalement par rapport à la direction de travail : un rotor R 1 est en position avancée et deux rotors R2 sont latéralement en retrait. Dans cette variante, les rotors R2, R3 extérieurs recoupent la zone de travail du rotor R1 médian sans que les deux rotors extérieurs R2, R3 ne se recoupent. Cette disposition du châssis en triangle donne une largeur de travail L3. Elle permet une variante particulièrement intéressante sous la forme d'un châssis 1 en deux parties 1A, 1B articulées l'une à l'autre autour de l'axe Z1Z1 du rotor R1 et permettant de régler la largeur de travail L3 par l'angle (γ) entre les deux parties 1A, 1B du châssis 1. Chacune des deux parties de châssis porte son rotor R2, R3 et la partie centrale correspondant à l'axe Z1Z1 du rotor.

La liaison réglable entre les deux parties de châssis peut être assurée par un vérin ou par un organe mécanique très simple avec des goupilles. Le réglage par vérin permet de modifier la largeur de travail en cours de fonctionnement, par exemple pour tenir compte de modifications locales du terrain. La partie de châssis 1 munie de moyens d'attelage et de la prise de force n'est pas représentée. Cette partie du châssis porte l'axe Z1Z1 du rotor R1 et l'articulation des parties mobiles 1A, 1B.

Les figures 5A-5C montrent également qu'en démontant les satellites d'un rotor sans qu'il soit nécessaire de démonter le rotor, on peut modifier le travail de l'équipement et notamment sa largeur de travail. Une telle modification simple de l'équipement peut être intéressante si l'on neutralise le rotor central R2 selon les figures 4A ou 4B pour ne travailler que deux bandes de terrain et laisser une bande centrale non traitée.

La vue de dessus utilisée pour les figures 5A-5C laisse supposer que l'axe ZZ des rotors est vertical ou du moins montant. Mais cette inclinaison peut être modifiée même de façon importante dans le cas des équipements des figures 5A, 5B et d'une manière moindre pour l'équipement de la figure 5C lorsque les rotors ne sont pas alignés (angle δ différent de 180°) de manière à travailler le sol en profondeur comme cela a été déjà indiqué à propos de la figure 4.

Les différentes orientations ou modifications d'orientation et d'inclinaison β), (γ) peuvent être faites soit par l'attelage du tracteur, soit par le châssis de l'équipement alors composé de deux parties réglables l'une par rapport à l'autre.

Enfin suivant une autre variante non représentée, bien que les rotors soient présentés comme alignés transversalement par rapport à la direction d'avancée de l'équipement, il est également possible de choisir une disposition en quinconce par exemple une alternance de rotors en position avancée et de rotors en position décalée vers l'arrière pour travailler une largeur importante avec quatre rotors et plus.

Suivant une autre variante non représentée, le châssis est formé d'éléments ou modules munis chacun d'un rotor et permettant d'incliner différemment les axes ZZ des rotors par simple pivotement d'un élément de châssis par rapport à l'autre, d'autant plus simplement que l'axe transversal de pivotement peut être aussi l'axe de l'arbre transversal transmettant le mouvement aux rotors.

## Revendications

1. Equipement aratoire de type herse rotative, formé d'un châssis porté ou tracté par un tracteur et équipé d'outils rotatifs travaillant le sol à une profondeur réglable,
**caractérisé en ce que**
le châssis (1) comporte au moins un rotor (2) d'axe descendant (ZZ) et portant des branches (23) munies de satellites (25) garnis de dents (252) destinées à travailler le sol,
le rotor (2) étant entraîné en rotation autour de son axe (ZZ) et chaque satellite (25), autour de son axe (ZZ).

2. Equipement selon la revendication 1,
**caractérisé en ce qu'**
un satellite (25) est formé d'un moyeu (251) portant des dents rayonnantes (252), notamment dirigées radialement.

3. Equipement selon la revendication 2,
**caractérisé en ce que**
le moyeu (251) du satellite (25) est en forme de boule sensiblement sphérique composée d'une couronne cylindrique équatoriale (251-1) et portant de chaque côté deux troncs de cône (251-2, 251-3), la couronne et les troncs de cône étant munis chacun d'un ensemble de dents (252).

4. Equipement selon la revendication 3,
**caractérisé en ce que**
les dents (252) de la couronne (251-1) et celles des troncs de cône (251-2, 251-3) sont décalées angulairement.

5. Equipement selon la revendication 2,
**caractérisé en ce que**
le moyeu du satellite est en forme de cylindre muni d'ensembles de dents répartis à la périphérie.

6. Equipement selon la revendication 1,
**caractérisé en ce que**
les dents (252) sont en forme de tige ou de lame, vissées au moyeu de leur satellite.

7. Equipement selon la revendication 1,
**caractérisé en ce que**
les satellites (25) sont fixés de manière amovible à leur rotor (2) notamment à leur arbre (24) porté par le rotor (2).

8. Equipement selon la revendication 1,
**caractérisé en ce que**
les branches (23) du rotor (2) sont inclinées vers le bas (α) par rapport à l'axe (ZZ) du rotor (2).

9. Equipement selon la revendication 1,
**caractérisé en ce qu'**
il comporte trois rotors (2) et chaque rotor a trois branches (23) munies chacune d'un satellite (25) et réparties de manière équiangulaire, les branches des rotors voisins étant décalées angulairement de façon que pour la rotation, une branche d'un rotor passe entre deux branches du rotor voisin.
